# EUROPÄISCHE PATENTANMELDUNG

(11) **EP 2 431 786 A1**
(43) Veröffentlichungstag der Anmeldung: **21.03.2012**
(21) Anmeldenummer: 10177422.2
(22) Anmeldetag: 17.09.2010
(51) Int. Cl.: G02B 27/22, G02F 1/13357

(54) **Autostereoskopisches 3D-Display**

(71) Anmelder: Bayer MaterialScience AG, 51368 Leverkusen (DE)
(72) Erfinder: Fäcke, Thomas, 51368 Leverkusen (DE); Bruder, Friedrich-Karl, 51368 Leverkusen (DE); Hagen, Hagen, 51368 Leverkusen (DE); Walze, Günther, Taiwan (CN); Walze, Günther, Taiwan (CN)

(57) **Zusammenfassung**

Die Erfindung betrifft ein autostereoskopisches 3D Display (1) umfassend eine Beleuchtungseinheit (2) mit zwei Lichtquellen (3, 4), einen Lichtleiter (5), ein holographisch-optisches Element (6) als diffraktives optisches Lichtlenkelement, ein transparentes Display Panel (7) und eine Steuereinheit (8), um die Lichtquellen (3, 4) alternierend jeweils mit einem rechten und einem linken, auf dem Display Panel (7) dargestellten, parallaktischen Bild zu synchronisieren, wobei die Lichtquellen (3, 4) so ausgerichtet sind, Licht jeweils aus unterschiedlichen Richtungen in den Lichtleiter (5) einzustrahlen und das holographisch-optische Element (6) und das Display Panel (7) derart angeordnet sind, dass vom Lichtleiter abgegebenes Licht, abhängig von seiner Vorzugrichtung, vom holographisch-optischen Element (6) in zwei verschiedene Richtungen gebeugt und durch das Display Panel (7) gelenkt wird.

## Beschreibung

Die vorliegende Erfindung betrifft ein autostereoskopisches 3D Display.

Ein autostereoskopisches 3D Display (ASD) ist ein Bildschirm, der stereoskopische, also für einen oder mehrere Menschen dreidimensional erscheinende Bilder anzeigen kann. Unter dreidimensionalen Bildern versteht man Bilder, die im Vergleich zu den herkömmlichen zweidimensionalen Bildern, zusätzlich eine Tiefenwirkung aufweisen. Der Betrachter benötigt bei ASDs im Gegensatz zu herkömmlichen stereoskopischen Displays keine Hilfsmittel wie Brillen, Prismenbetrachter oder andere optische Hilfsmittel.

Zur Erzielung eines dreidimensionalen Eindrucks werden bei autostereoskopischen Displays zwei Bilder so projiziert, dass mittels Parallaxe jedes Auge ein anderes Bild sieht. Dabei muss die Projektion in zwei verschiedene Richtungen derart ausgeprägt sein, dass die Bilder die Augen des Betrachters als Stereopaar erreichen. Üblicherweise werden dabei die zwei Projektionsrichtungen in der hinteren Beleuchtungseinheit des Displays, der "Backlight Unit", erzeugt.

Die Entwickler von ASDs und deren Einzelkomponenten haben das Ziel, eine möglichst realistische räumliche Darstellung von Bildern und zugleich eine hohe Ergonomie für den Betrachter zu ermöglichen. Grundvoraussetzung für ein realistisches, qualitativ hochwertiges Bild sind dabei eine hohe Bildauflösung (bekannte hochauflösende 2D-Fernseher - HDTV sind der hier anzustrebende Standard) und eine hohe Bildfrequenz. Hinzu kommen Elemente der 3D-Kodierung. Eine gute Ergonomie wird durch Anpassung des sogenannten Sweet Spots, dem Punkt des optimalen stereoskopischen Effekts, an die aktuelle Position eines oder mehrerer Beobachter, erreicht.

Im Stand der Technik sind grundsätzlich zwei verschiedene technische Lösungsansätze zur Erreichung dieser Ziele bekannt: Gemäß einem ersten Ansatz können zwei Projektionsrichtungen z.B. durch Linsen oder Prismenraster realisiert werden, die das Licht einzelner Display-Pixel in verschiedene Richtungen von dem Bildschirm weg ablenken. Eine vertikale Streifenmaske weist dabei einzelne vertikale Pixel-Steifen auf, die richtungsselektiv arbeiten. Da es allerdings in einem solchen ASD linke und rechte Pixel-Streifen gibt, wird die Bildauflösung im Vergleich zu einem üblichen 2D-Display halbiert. Weiterhin ist es technisch schwierig, ein 2D-Bild in Originalauflösung durch entsprechendes Konfigurieren der Streifenmaske durch ein Flüssigkristall-Element (LCD) darzustellen. Ein weiterer Nachteil für die 2D-Darstellung ist, dass die Streifenmaske eine parallaktische Barriere darstellt, die Teile der Lichtstrahlen abblockt und somit das Bild verdunkelt.

Ein zweiter Ansatz betrifft ASDs mit zwei Lichtquellen und einer Synchronisationseinheit, die zeitversetzte Wechselbilder bei beibehaltener Maximalauflösung anzeigen. Voraussetzung für ein flimmerfreies Bild in einem solchen lichtdurchlässigen ("transmissiven") ASD ist eine hinreichend hohe Wechselfrequenz. Dies ist jedoch heute im Stand der Technik realisiert. Konkrete Ausführungsformen dieses Ansatzes werden nachfolgend detaillierter beschrieben.

Die US 2006/0164862 offenbart ein autostereoskopisches Display, enthaltend zwei separate Lichtleiter mit prismatischen, refraktiven Auslenkstrukturen sowie zwei Lichtquellen, einem Diffusorfilm, einem transmissiven Display Panel, Lichtabsorbern sowie Reflektoren.

Aus der US 2005/0264717 ist wiederum ein autostereoskopisches Display bekannt, dass zwei separate Lichtquellen an einem Lichtleiter mit prismatischen, refraktiven Auslenkstrukturen sowie eine zweite optischen Folie, ebenfalls mit prismatischen, refraktiven Auslenkstrukturen sowie ein transmissives Display Panel aufweist.

In der US 2007/0276071 ist schließlich ein autostereoskopisches Display beschrieben, dass zwei Lichtquellen, die an unterschiedlichen Seiten eines Lichtleiters positioniert sind, ein doppelprismatisches refraktives Lichtelement sowie ein transmissives Display Panel aufweist. Das doppelprismatische refraktive Lichtelement besteht aus einer dreiwinkligen prismatischen Struktur, die dem Lichtleiter zugewandt ist und einer sphärischen Linsenstruktur, die vom Lichtleiter abgewandt ist. Die beiden Lichtquellen werden über eine Synchronisationseinheit abwechselnd derart angesteuert, dass das transmissive Display Panel nacheinander ein rechtes und ein linkes stereoskopische Bild eines darzustellenden dreidimensionalen Bildinhalts wiedergibt.

Die vorstehend beschriebenen autostereoskopischen Displays weisen jeweils Lichtlenkelemente mit refraktiven Auslenkstrukturen auf. Bei der Verwendung derartiger Elemente kommt es allerdings zu Beeinträchtigungen der Bildqualität, die auf refraktive Störeffekte zurückzuführen sind. Ursache der Störeffekte sind unter anderem unerwünschte sekundäre Lichtwege, Mehrfachreflexionen oder Moiré-Effekteeffekte, die durch die Interaktion parallel liegender refraktiver optischer Strukturen hervorgerufen werden. Die Störeffekte können im Gesamtsystem zu Streifenbildung, einer Reduzierung der Auflösung, und/oder einer unzureichenden Trennung der Kanäle zur 3D Darstellung in Verbindung mit einer allgemeinen Unschärfe führen. Dies kann wiederum eine stärkere Erschöpfung der Augen des Betrachters bewirken. Weiterhin sind deutliche visuelle Qualitätsunterschiede zu marktüblichen 2D HD-TVs (High Definition Fernseher) erkennbar, die die Marktakzeptanz derartiger autostereoskopischer Displays reduzieren.

Ein weiterer Nachteil bei der Verwendung von Lichtlenkelementen mit mehreren Schichten aus refraktiven Auslenkstrukturen ist die Schwierigkeit, die notwendige hohe laterale Positionierungsgenauigkeit der einzelnen refraktiven optischen Oberflächenelemente zueinander sicherzustellen. Kommt es hier zu geringsten Abweichungen, wird die Trennung in die zwei oder mehr Kanäle zur 3D Darstellung massiv beeinträchtigt. Außerdem werden in diesem Fall eventuell bereits vorhandene optische Störeffekte, wie z.B.Moiré-Effekte, weiter verstärkt.

Aufgabe der Erfindung war daher, ein autostereoskopisches 3D Display bereitzustellen, dass die beschriebenen optischen Störeffekte nicht aufweist und mit dem deshalb eine bezüglich der Bildqualität verbesserte 3D Darstellung erzielt werden kann.

Diese Aufgabe ist durch ein autostereoskopisches 3D Display umfassend eine Beleuchtungseinheit mit zwei Lichtquellen, einen Lichtleiter, ein holographisch-optisches Element als diffraktives, optisches Lichtlenkelement, ein transparentes Display Panel und eine Steuereinheit, um die Lichtquellen alternierend jeweils mit einem rechten und einem linken, auf dem Display Panel dargestellten, parallaktischen Bild zu synchronisieren, wobei die Lichtquellen so ausgerichtet sind, Licht jeweils aus unterschiedlichen Richtungen in den Lichtleiter einzustrahlen und das holographisch-optische Element und das Display Panel derart angeordnet sind, dass vom Lichtleiter abgegebenes Licht, abhängig von seiner Vorzugrichtung, vom holographisch-optischen Element in zwei verschiedene Richtungen gebeugt und durch das Display Panel gelenkt wird, gelöst.

Das erfindungsgemäße autostereoskopische 3D Display soll dabei vor allem refraktive optische Störeffekte soweit vermeiden bzw. reduzieren, dass das Risiko von Erschöpfungszuständen der Augen signifikant herabgesetzt wird. Möglich wird dies insbesondere durch den Einsatz eines holographisch-optischen Elementes, mit dem das Licht so umgelenkt wird, dass die zur Autostereoskopie notwendige richtungsspezifische Kanalaufteilung gewährleistet ist. Die Anzahl der Kanäle kann hierbei auch größer als zwei und sowohl gerade als auch ungerade ausfallen.

Weiterhin fallen bei dem erfindungsgemäßen autostereoskopischen 3D Display die hohen Anforderungen an die laterale Positionierungsgenauigkeit der optischen Elemente zueinander weg, was zu einer deutlich vereinfachten Produzierbarkeit dieses Typs von Displays führt.

Gemäß einer ersten bevorzugten Ausführungsform der Erfindung ist vorgesehen, dass wenigstens eine Oberfläche des Lichtleiters eine refraktive Oberfläche aufweist. Die refraktive Oberfläche kann dabei insbesondere lineare translationsinvariante Prismenstrukturen, mehrdimensionale pyramidenartige Prismenstrukturen, lineare translationsinvariante Linsenstrukturen basierend auf Ellipsoiden, Polynomen, Kreiskegelabschnitten, Hyperbeln oder Kombinationen dieser Grundkörper, mehrdimensionale halbkugelartige Linsenstrukturen basierend auf Ellipsoiden, Polynomen, Kreiskegelabschnitten, Hyperbeln oder Kombinationen oder Kombinationen dieser Grundkörper, nichtperiodische streuende Oberflächenstruktur, entweder flächig aufgebracht oder bereichsweise in Kombination mit nichtstreuenden Strukturen aufweisen.

Die refraktive Oberfläche kann mittels Prägen (embossing), wet embossing, Spritzguss, Extrusion, Druck, Laserstrukturierung und anderen Verfahren hergestellt werden.

Es ist ebenfalls möglich, dass das erfindungsgemäße autostereoskopische 3D Display zusätzlich wenigstens eine optische Folie aufweist. Bei der optischen Folie kann es sich insbesondere um eine Diffusorfolie, Mikrolinsenfolie, Prismenfolie, Lentikularfolie oder eine Reflexionspolarisationsfolie handeln. Selbstverständlich können in dem Display auch mehrere derartige Folien vorhanden sein.

Besonders bevorzugt ist weiterhin, wenn das holographisch-optische Element ein Volumenhologramm ist.

Das holographisch-optische Element kann insbesondere auch so ausgebildet sein, dass es eine kollimierende oder divergierende Winkelverteilung erzeugt. Ein solches holographisch-optisches Element kann zum Beispiel zur Erhöhung der Helligkeit am Ort des Betrachters, zur Adressierung verschiedener Betrachter oder zur Verbesserung des 3D Eindrucks eingesetzt werden.

Weiter bevorzugt ist auch, wenn das holographisch-optische Element ein transmissives und / oder reflektives Hologramm oder ein transmissives und / oder reflektives kantenbeleuchtetets (engl.: edge-lit) Hologramm ist.

Möglich ist auch, dass das holographisch-optische Element aus mehreren miteinander verbundenen Einzelhologrammen aufgebaut ist. Dabei können die Einzelhologramme insbesondere Volumenhologramme sein, die wiederum bevorzugt durch Multiplexing und ganz besonders bevorzugt durch Winkelmultiplexing und / oder Wellenlängenmultiplexing erhältlich sind. Die Einzelhologramme können dabei für die linke und die rechte Projektion dienen. Ebenso können die Einzelhologramme jeweils speziell so ausbildet werden, dass sie nur Strahlung einer der drei Primärfarben rot, grün und blau beugen. Es ist auch möglich mehr als drei Primärfarben zu verwenden, wie z.B. vier Primärfarben (z.B. "rot", "grün", "blau" und "gelb"). Schließlich können beide Effekte auch kombiniert werden, so dass dann beispielsweise sechs Einzelhologramme für jede der drei Primärfarben und die zwei stereoskopischen Richtungen verwendet werden.

Die Herstellung solcher Volumenhologramme ist bekannt (H. M. Smith in "Principles of Holography" Wiley-Interscience 1969) und kann z.B. durch Zweistrahlinterferenz erfolgen (S. Benton, "Holographic Imaging", John Wiley & Sons, 2008).

Verfahren zur Massenvervielfältigung von Reflexions-Volumenhologrammen sind in der US 6,824,929 beschrieben, wobei ein lichtempfindliches Material auf ein Masterhologramm positioniert wird und anschließend mittels kohärenten Lichts kopiert wird. Die Herstellung von Transmissionshologrammen ist ebenfalls bekannt. So beschreibt beispielsweise die US 4,973,113 ein Verfahren mittels einer Rollenreplikation.

Insbesondere sei auch auf die Herstellung von Edge-lit Hologrammen hingewiesen, die spezielle Belichtungsgeometrien benötigen. Neben der Einführung durch S. Benton (S. Benton, "Holographic Imaging", John Wiley & Sons, 2008, Chapter 18) und einem Überblick klassischer zweiund dreistufiger Herstellverfahren (siehe Q. Huang, H. Caulfield, SPIE Vol. 1600, International Symposium on Display Holography (1991), S. 182) sei auch auf die WO 94/18603 verwiesen, die Kantenillumination und Wellenführungshologramme beschreibt. Weiterhin sei auf die besonderen Herstellverfahren in der WO 2006/111384 hingewiesen, in dem ein Verfahren auf Basis eines speziellen optischen Adapterblocks beschrieben wird.

Für die Herstellung der Volumenhologramme kommen verschiedene Materialien in Frage. Geeignet sind feinkörnige Silberhalogenid Emulsionen oder Dichromatgelatinen, die ein nasschemisches Entwicklungsverfahren nach der Belichtung benötigen. Weiterhin sind Photopolymere, wie z.B. Omnidex^{®} Photopolymerfilm (Fa. DuPont de Neymours), der ein thermisches Nachbehandeln nötig macht, sowie Bayfol^{®} HX Photopolymerfilm (Fa. Bayer MaterialScience AG), der keine weitere chemische oder thermische Nachbehandlung zur vollständigen Entwicklung des Hologramms benötigt, geeignet. Ideale Materialien zeigen eine hohe Transparenz und geringe Trübung. Daher sind Photopolymere für diese Anwendung bevorzugt. Besonders bevorzugt sind Photopolymere, die kein thermisches Nachbehandeln benötigen.

Das holographisch-optische Element kann bevorzugt entweder aus einer Schicht mit mindestens zwei Hologrammen, die über Winkelmultiplexing oder Wellenlängenmultiplexing einbelichtet wurden oder aus mindestens zwei übereinander laminierten Schichten mit jeweils mindestens einem Hologramm bestehen. Mehrere Hologramme pro Schicht können wiederum durch Winkelmultiplexing oder Wellenlängenmultiplexing erhalten werden.

Zur Optimierung der homogenen Ausleuchtung kann die Beugungseffizienz und / oder der Beugungswinkel der einzelnen Hologramme in den Schichten über die Breite des holographischen optischen Elements variiert werden Diese Variation der Beugungseffizienz und /oder der Beugungswinkel kann stufenweise oder / und kontinuierlich erfolgen.

Gemäß einer weiteren bevorzugten Ausführungsform ist vorgesehen, dass der Lichtleiter ein Quader ist.

Der Lichtleiter kann durch industrieübliche Verfahren hergestellt werden. Dabei sind Spritzgußverfahren und Plattenextrusionsverfahren üblich. Als Materialien werden üblicherweise optisch transparente Kunststoffe wie z.B. Polymethylmethacrylat und Polycarbonat verwendet. Die Formgebung wird vorzugsweise entweder durch die Spritzgußform im Spritzgußverfahren oder durch Düsenform und möglicher Heißprägeverformung durch speziell geformte Rollwalzen im Plattenextrusionsverfahren umgesetzt.

Möglich ist aber auch, dass der Lichtleiter abgeschrägte Kanten aufweist. Hierdurch kann das Einkoppeln des Lichts und die dann erhaltenen Beleuchtungswinkel optimiert werden.

Bei den Lichtquellen kann es sich insbesondere um Gasentladungslampen, bevorzugt kalte Gasentladungslampen, lichtemittierende Dioden, bevorzugt rote, grüne, blaue, gelbe und / oder weiße lichtemittierende Dioden und / oder um mehrere Laserdioden handeln.

Das von den Lichtquellen abgegebene Licht kann eine breite spektrale Verteilung der Wellenlängen (weißes Licht) oder ein Bandenspektrum aufweisen. Im Extremfall kann es sich sogar um monochromatisches Licht handeln. Es ist aber bevorzugt, wenn die Lichtquellen Licht mit einem Bandenemissionsspektrum abstrahlen.

Bevorzugt ist, wenn die Lichtquellen an zwei gegenüberliegenden Seitenflächen des Quaders angeordnet sind.

Die Lichtquellen können in direktem Kontakt (linienförmig oder flächig) mit den Seitenflächen des Quaders oder hierzu benachbart sein.

Es ist ebenfalls möglich, ein refraktives oder diffraktives optisches Element auf dem Lichtleiter anzubringen, um die optische Einkopplung des Lichts effizienter und / oder winkel- bzw. frequenzselektiver zu gestalten. So eignen sich hierfür auch Prismenstrukturen, die den gleichen (oder nahezu gleichen) Brechungsindex wie der Lichtleiter haben. Die Lichtquellen werden dabei derart positioniert, dass ein Einkoppeln des Lichtes möglichst unter Vermeidung von partieller oder totaler Reflexion erfolgt. Refraktive optische Elemente können auch gleich bei der Herstellung des Lichtleiters selbst mit hergestellt werden. Diffraktive optische Elemente können als Volumen- oder Prägehologramm (ein dünnes Transmissionshologramm, dass durch einen embossing, wet embossing, oder z.B. durch einen lithografischen Prozess hergestellt werden kann) ausgeführt werden.

Bei einem bevorzugten autostereoskopischen 3D Display ist vorgesehen, dass das holographisch-optische Element, der Lichtleiter und das Display Panel in einer der folgenden Reihenfolgen angeordnet sind: a) Holographisch-optisches Element, Lichtleiter und Display Panel oder b) Lichtleiter, holographisch-optisches Element, Display Panel. Dabei können das holographisch-optische Element, der Lichtleiter und das Display Panel flächig miteinander verbunden sein.

Das holographisch-optische Element kann aber auch entweder unmittelbar angrenzend oder beabstandet zu dem Lichtleiter freitragend platziert sein.

Ebenso kann das Display Panel entweder unmittelbar angrenzend oder beabstandet zu dem Lichtleiter freitragend platziert sein.

Die Erfindung wird im Folgenden anhand der Zeichnungen näher erläutert. In den Zeichnungen zeigen
- Figur 1: eine schematische Aufsicht einer ersten Ausführungsform der Erfindung,
- Figur 2: eine schematische Aufsicht einer zweiten Ausführungsform der Erfindung,
- Figur 3: eine schematische Aufsicht einer dritten Ausführungsform der Erfindung,
- Figur 4a: eine schematische Aufsicht einer vierten Ausführungsform der Erfindung im Betrieb,
- Figur 4b: eine schematische Aufsicht der vierten Ausführungsform der Erfindung im Betrieb,
- Figur 5a: eine schematische Aufsicht einer fünften Ausführungsform der Erfindung im Betrieb,
- Figur 5b: eine schematische Aufsicht der fünften Ausführungsform der Erfindung im Betrieb,
- Figur 6a: eine perspektivische Ansicht der ersten Ausführungsform der Erfindung im Betrieb,
- Figur 6b: eine weitere perspektivische Ansicht der ersten Ausführungsform der Erfindung im Betrieb,
- Figur 7a: eine perspektivische Ansicht einer sechsten Ausführungsform der Erfindung im Betrieb,
- Figur 7b: eine weitere perspektivische Ansicht der sechsten Ausführungsform der Erfindung im Betrieb,
- Figur 8a: eine schematische Aufsicht einer siebten Ausführungsform der Erfindung,
- Figur 8b: eine schematische Aufsicht einer achten Ausführungsform der Erfindung und
- Figur 9: eine schematische Aufsicht einer neunten Ausführungsform der Erfindung.

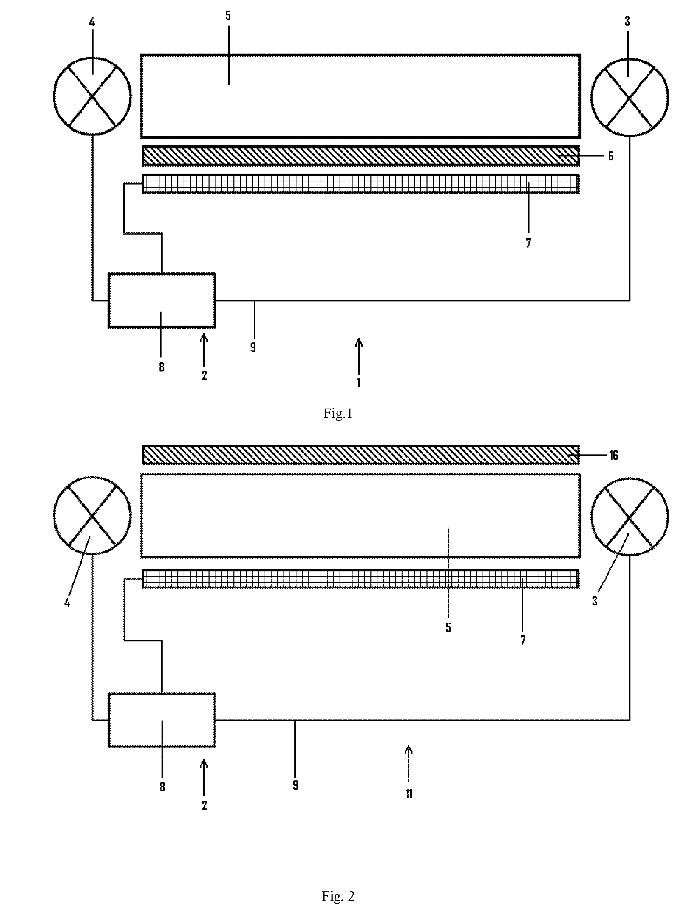

In der Figur 1 ist eine erste Ausführungsform eines erfindungsgemäßen autostereoskopischen 3D Displays (ASD) schematisch in der Aufsicht dargestellt. Das hier gezeigte ASD 1 umfasst eine Beleuchtungseinheit 2 mit zwei Lichtquellen 3 und 4, einen quaderförmigen Lichtleiter 5, ein holographisch-optisches Element 6 als diffraktives optisches Element, ein transparentes Display Panel 7 sowie eine Steuereinheit 8. Bei dem Display Panel 7 kann es sich beispielsweise um ein im Stand der Technik bekanntes lichtdurchlässiges LCD-Display handeln. Die Steuereinheit 8 ist über elektrische Zuleitungen 9 mit den Lampen 3 und 4 sowie dem Display Panel 7 verbunden. Die Lichtquellen 3 und 4 sind so ausgerichtet und angeordnet, dass sie Licht aus jeweils unterschiedlichen Richtungen, d.h. einmal von rechts und einmal von links in die ihnen jeweils gegenüberliegenden Seitenflächen des quaderförmigen Lichtleiters 5 einstrahlen. Das holographisch-optische Element 6 und das Display Panel 7 sind wiederum in dieser Reihenfolge in der Zeichenebene unterhalb von und parallel zu dem Lichtleiter 5 angeordnet. Das holographische optische Element 6 ist hier als Transmissionshologramm ausgebildet. Derartige Hologramme sind beispielsweis in P. Hariharan, Optical Holography, Cambridge Studies in Modern Optics, Cambridge Universtiy Press, 1996 beschrieben.

Während des Betriebs des ASD 1 werden die Lichtquellen 3 und 4 von der Steuereinheit 8 jeweils mit einer hohen Frequenz größer als 50 Herz mit einem rechten und einem linken, vom Display Panel 7 dargestellten parallaktischen Bild, synchronisiert. Optimierte Schaltzyklen für die Steuereinheit sind beispielsweise in der WO 2008/003563 beschrieben.

Das Licht aus den Lichtquellen 3, 4 tritt in den Lichtleiter 5 ein, wird an der in der Papierebene oben dargestellten Grenzfläche des Lichtleiters 5 reflektiert und an der gegenüberliegenden Unterseite des Lichtleiters 5 ausgekoppelt. Das so vom Lichtleiter 5 in Richtung des holographisch-optischen Elements 6 abgegebene Licht weist je nach dem, ob es von der rechten Lichtquelle 3 oder der linken Lichtquelle 4 stammt, eine unterschiedliche Vorzugsrichtung auf und wird dann entsprechend vom holographischen Element in zwei verschiedene Richtungen gebeugt und auf das Display Panel 7 gelenkt.

Von dem ASD 1 werden auf diese Weise alternierend zwei parallaktische Bilder erzeugt, von denen jeweils eines vom rechten und eines vom linken Auge eines Betrachters wahrgenommen wird, wodurch für ihn ein qualitative hochwertiges dreidimensionales Bild mit voller Auflösung entsteht.

Es ist ebenfalls möglich, dass das holographisch-optische Element 6 aus mehreren Einzelhologrammen aufgebaut ist, die in Schichten aufeinander liegend oder beabstandet zueinander positioniert sind. Ebenfalls ist es möglich, dass das holographisch-optische Element 6 ausgelegt ist jeweils nur Licht einer Farbe (also eines bestimmten eingeengten Frequenzbereiches des für den Menschen sichtbaren Lichtes), oder jeweils nur Licht einer Lichtquelle, oder eben nur eine Farbe und/oder nur Licht aus einer Richtung abzubeugen.

In der Figur 2 ist eine alternative Variante des ASD 1 der Figur 1 in der Aufsicht gezeigt. Unterschiede sind, dass hier das holographisch-optische Element 6 in der Papierebene oberhalb des Lichtleiters 5 und nicht zwischen Lichtleiter 5 und Display Panel 7 angeordnet ist und dass das holographisch-optische Element 16 hier ein Reflexionshologramm anstelle eines Transmissionsholgramms ist.

Bei diesem ASD 11 gibt der Lichtleiter 5 das in ihn eingestrahlte Licht in Richtung des holographisch-optischen Elements 6 ab, wo es dann zurück in den Lichtleiter 5 gebeugt wird. Nach dem Durchgang durch den Lichtleiter 5 trifft es dann auf das Display Panel 7.

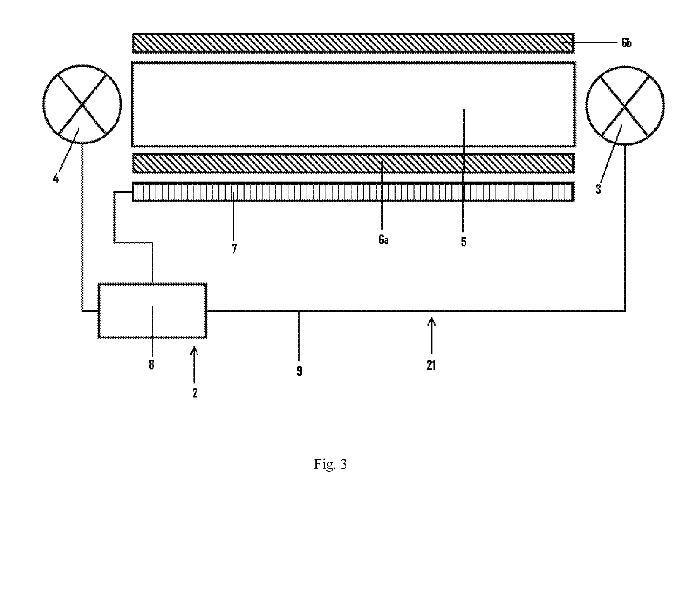

Figur 3 zeigt noch eine weitere Variante des in Figur 1 gezeigten Aufbaus. Hier sind zwei holographisch-optische Elemente 6a und 6b vorhanden, wobei das holographisch-optische Element 6a in Anordnung und Funktion dem holographisch-optischen Element 6 des ASD 1 der Figur 1 und das holographisch-optische Element 6b in Anordnung und Funktion dem des holographisch-optischen Elements 16 des ASD 1 der Figur 2 entspricht. Somit weist das ASD 21 der Figur 3 sowohl ein Transmissionshologramm (6a) als auch ein Reflexionshologramm (6b) auf.

Während des Betriebs des ASD 21 der Figur 3 tritt in einem Schaltzyklus zunächst Licht aus der Lichtquelle 4 aus, während die Lichtquelle 3 nicht leuchtet. Das Licht tritt in den Lichtleiter 5 und von dort in das holographisch-optische Element 6a ein und wird dort in Richtung des Display Panels 7 gebeugt. Nun schaltet die Steuereinheit 8 die Lichtquelle 4 aus und dann die Lichtquelle 3 gleichzeitig oder leicht zeitlich überlappend oder mit zeitlichem Abstand ein. Das von der Lichtquelle 3 ausgehende Licht wird über den Lichtleiter 5 durch das holographisch-optische Element 6b in Richtung des Display Panels 7 gebeugt, wobei es durch den Lichtleiter 5 und das holographisch-optische Element 6a nicht oder nicht wesentlich abgelenkt wird. In beiden Schaltzyklen erreicht das Licht des ASD 21 jeweils das linke bzw. rechte Auge des Betrachters.

Es ist ebenfalls möglich die Lichtführungsfolge der holographisch-optische Elementen 6a und 6b zu vertauschen. Ebenfalls ist es möglich, dass jedes der holographisch-optischen Elemente 6a und 6b für jeweils nur eine Farbe oder aber mehrere Farben beugend wirkt, also die Lichtführungsfolge z.B. für zwei Farben von dem holografisch-optischen Element 6a für "rotes" Licht und von dem holografisch-optischen Element 6b für "grünes" und "blaues" Licht erfolgt. Andere Kombinationen sind ebenfalls möglich. Hier kann es von Vorteil sein, wenn die Lichtquellen 3 und 4 aus unterschiedlichen Baueinheiten bestehen, die jeweils die Primärfarben emittieren und leicht unterschiedlich vertikal zueinander positioniert sind. Weiterhin ist es natürlich möglich, dass die beiden holographisch-optischen Elemente 6a und 6b für von den Lichtquellen 3 und 4 und durch den Lichtleiter 5 geführtes Licht beugend wirken und durch das Display Panel 5 jeweils eines der beiden stereoskoischen Bilder in das respektive Auge des Betrachters projizieren. Dieses Vorgehen hat den Vorteil einer höheren Lichteffizienz.

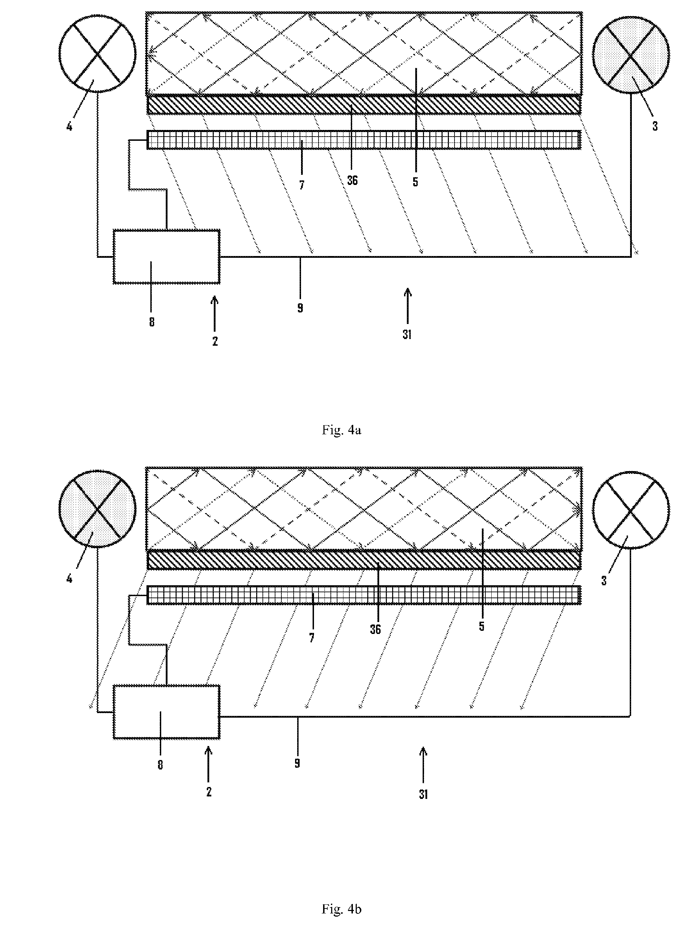

Die Figuren 4a und 4b zeigen wiederum in Aufsicht eine Variante des ASD 1 der Figur 1 während des Betriebs. Dabei zeigt Figur 4a ein Schaltzustand, bei dem die rechte Lichtquelle 3 Licht in den Lichtleiter 5 abstrahlt und die Figur 4b einen Zustand, bei dem die Lichtquelle 4 aktiviert ist.

Ein Unterschied zwischen dem ASD 1 der Figur 1 und der Vorrichtung 31 der Figuren 4a und 4b ist, dass bei dem ASD 31 das holographisch-optische Element 36 flächig unmittelbar mit dem Lichtleiter 5 verbunden ist. Außerdem ist bei dem ASD 31 das holografisch-optische Element 36 als Transmissions-Edge-lit Hologramm ausgeführt.

Es ist ebenfalls möglich, dass das holografisch-optische Element 36 aus mehreren Einzelhologrammen aufgebaut ist, die in Schichten aufeinander liegend oder beabstandet zueinander positioniert sind. Ebenfalls ist es möglich, dass das holografisch-optische Element ausgelegt ist, jeweils nur Licht einer Farbe (also eines bestimmten eingeengten Frequenzbereiches des für den Menschen sichtbaren Lichtes), oder jeweils nur Licht einer Lichtquelle, oder eben nur eine Farbe und / oder nur Licht aus einer Richtung abzubeugen.

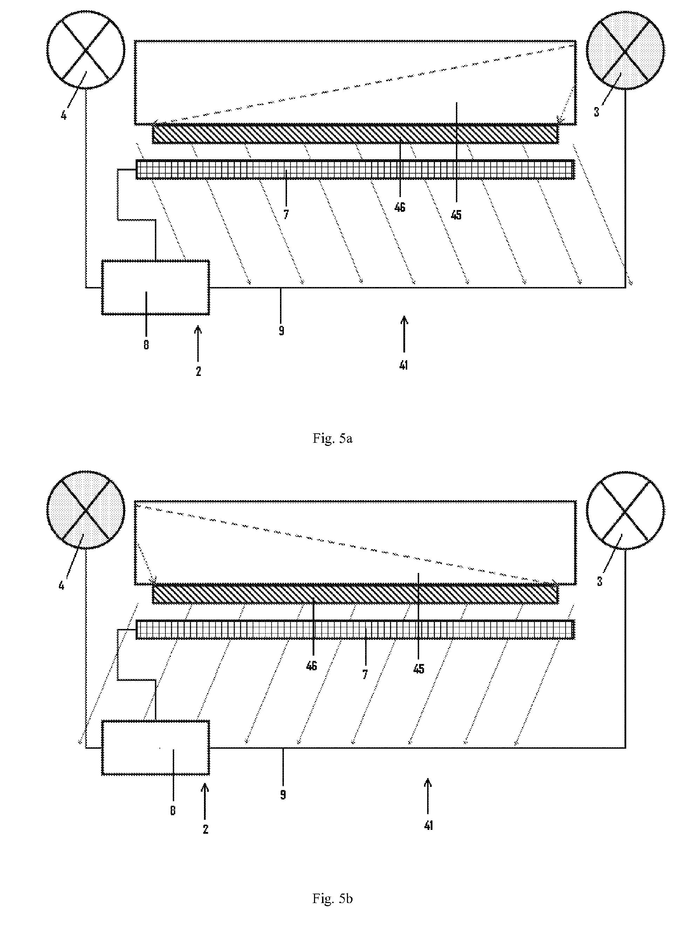

Figuren 5a und 5b zeigen eine Abwandlung des ASD 31 der Figuren 4a, 4b. Hier sind einerseits die Lichtquellen 3 und 4 in der Papierebene etwas weiter nach oben versetzt und andererseits wird ein Lichtleiter 45 verwendet, bei dem es im Inneren kaum zur (Total-)Reflektion des eingestrahlten Lichts kommt, sondern dieses direkt durch den Lichtleiter 45 zum holographisch-optischen Element 46 geleitet wird. Das holographisch-optische Element 46 (ein Transmissions Edgelit Hologramm) ist derart ausgebildet, dass es das vom Lichtleiter 45 stammende Licht wiederum abhängig von dessen Vorzugsrichtung in zwei verschiedene Richtungen beugt und auf das Display Panel 7 lenkt.

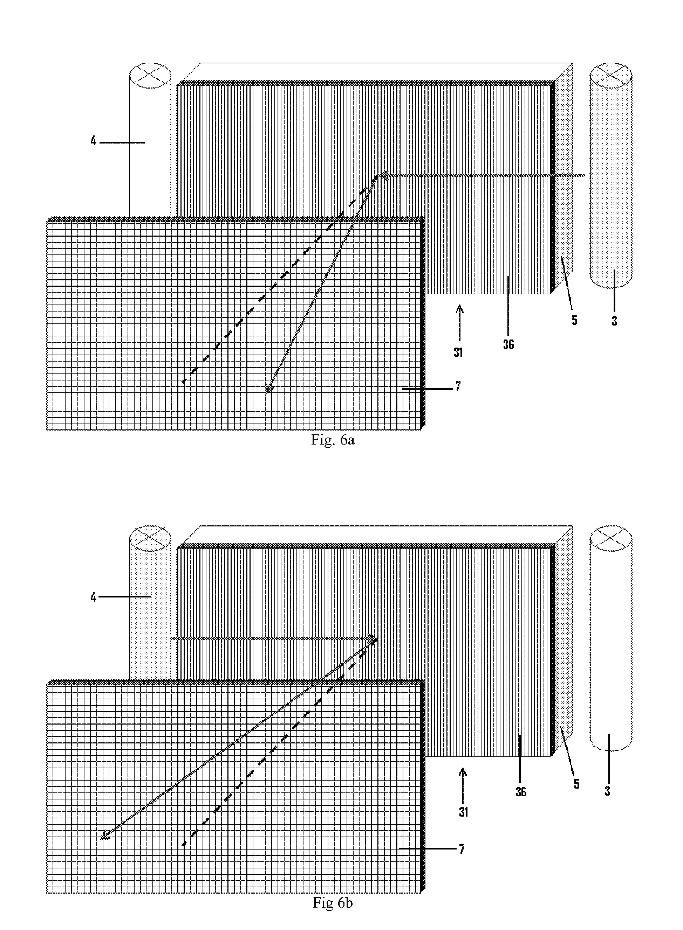

Die Figuren 6a und 6b sind perspektivische Darstellungen des ASD 31 der Figuren 4a und 4b im Betrieb. Figur 6a zeigt den Zustand des ASD 31 bei aktivierter Lichtquelle 3, in Figur 6b ist die linke Lichtquelle 4 aktiv. Es ist jeweils beispielhaft der Weg eines Lichtstrahls von einer der Lichtquellen 3 oder 4 durch den Lichtleiter 5 zum holographisch-optischen Element 36 und unten Beugung vom holographisch-optischen Element 36 auf das Display Panel 7 gezeigt. Das holographisch-optische Element 6 ist dabei so ausgelegt, dass eine Beugung in einer Ebene erfolgt, die parallel zu der Ebene liegt, die das Augenpaar eines Betrachters mit der Oberflächennormale des Display Panels 7 aufspannt.

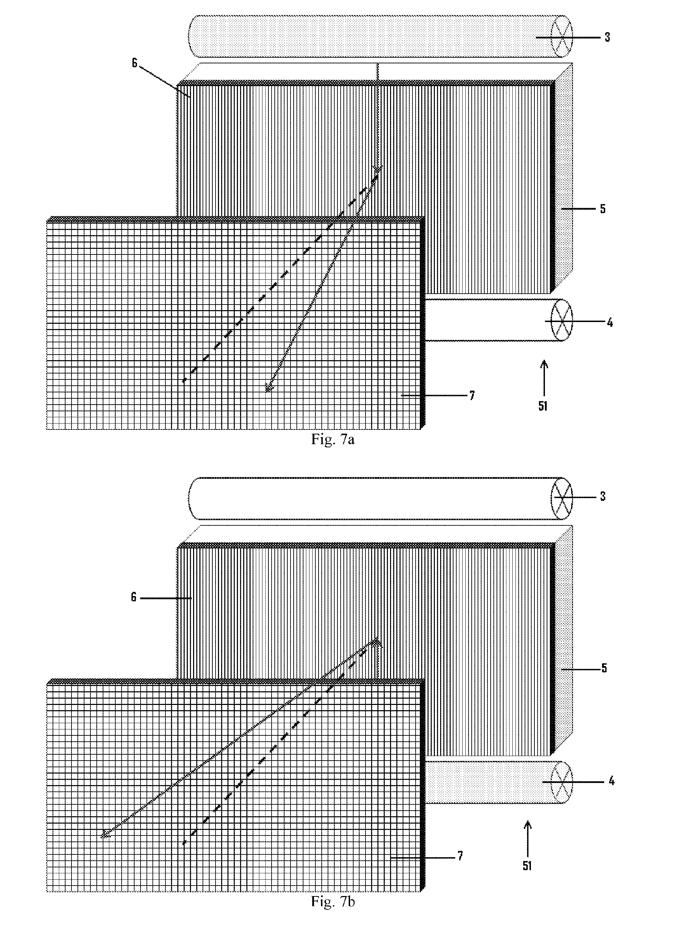

In den Figuren 7a und 7b ist perspektivisch als eine sechste Ausführungsform der Erfindung eine Variante des ASD 31 der Figur 4a und 4b im Betrieb dargestellt. Unterschied ist, dass hier die Lichtquellen 3 und 4 nicht rechts und links neben dem Lichtleiter 5 sondern oberhalb und unterhalb von diesem angeordnet sind. Hier ist außerdem das holographisch-optische Element 56 so ausgelegt, dass eine Beugung in einer Ebene erfolgt, die senkrecht zu der Ebene liegt, die das Augenpaar eines Betrachters mit der Oberflächennormale des Display Panels 7 aufspannt.

Grundsätzlich ist auch eine Kombination der Ausführungsformen der Figuren 6a, 6b und 7a, 7b möglich.

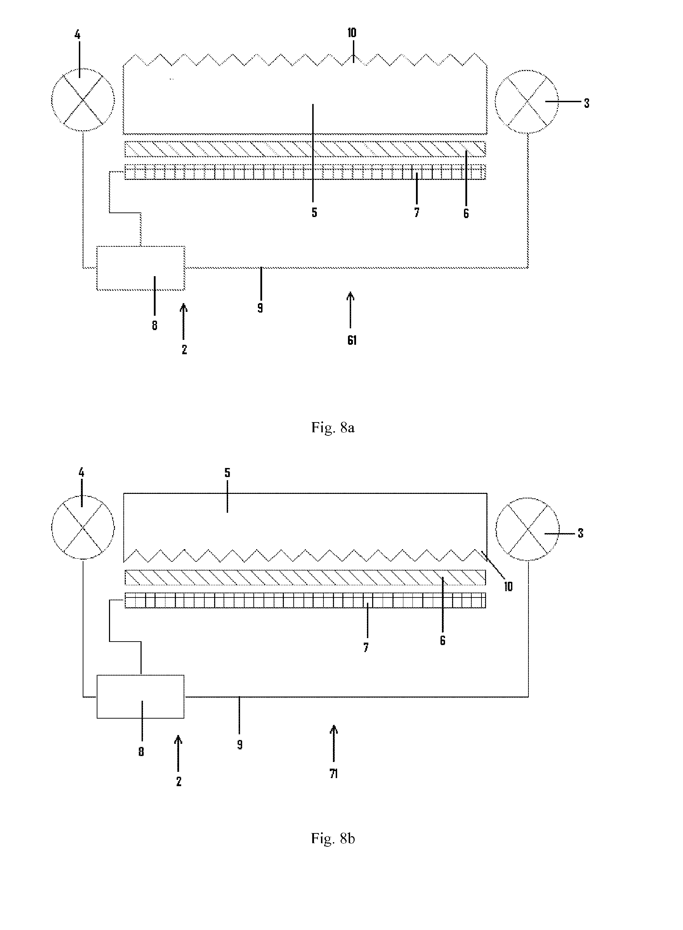

Figur 8a zeigt eine siebte Ausführungsform eines erfindungsgemäßen ASD. Dieses entspricht bis auf eine Abweichung dem ASD 1 der Figur 1. Einziger Unterschied ist, dass der Lichtleiter 5 in der Papierebene an der oberen Seite mit einer refraktiven Oberflächenstruktur 10 versehen ist.

Beim Betrieb des ASD 61 bewirkt die Oberflächenstruktur 10, dass ein noch größerer Anteil des eingestrahlten Lichts im Lichtleiter 5 reflektiert und dann in Richtung des holographisch-optischen Elements 6 abgegeben werden kann.

Weiterhin kann es vorteilhaft sein, die Oberflächenstruktur 10 z.B. durch eine Vakuummetallisierungsverfahren, zu verspiegeln, um etwa eine homogenere Ausleuchtung und / oder eine verbesserte Helligkeit des ASD 61 zu ermöglichen.

Auch bei dem ASD 61 ist es möglich, dass das holographisch-optische Element 6 direkt an den Lichtleiter 5 oder direkt an das Display Panel 7 angrenzt.

In der Figur 8b ist eine Variante des ASD 61 der Figur 8a gezeigt, bei dem die refraktiven Oberflächenstruktur 10 in der Papierebene an der unteren Seite des Lichtleiters 5 angeordnet ist. Dies bewirkt, dass das Licht gezielt aus dem Lichtleiter 5 effizienter ausgekoppelt und dann mittels des holographisch-optischen Elements 6 abgelenkt wird. Auf diese Weise wird die Helligkeit des ASD 71 erhöht und es kommt zu einer homogeneren Ausleuchtung des ASD.

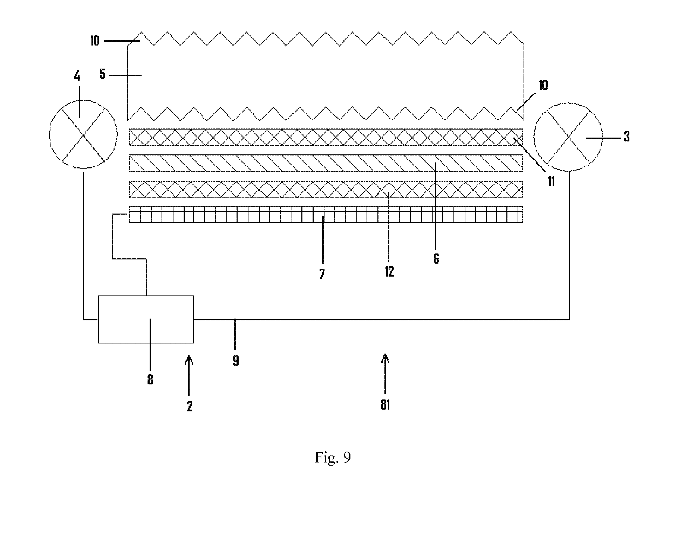

Eine neunte Ausführungsform des erfindungsgemäßen ASD ist schließlich in der Figur 9 schematisch in der Aufsicht gezeigt. Das hier dargestellte ASD 81 ist im Aufbau an die Vorrichtung der Figur 1 angelehnt. Allerdings sind hier zusätzlich zwei optische Folien 11 und 12 vorhanden, wobei eine Folie zwischen dem Lichtleiter 5 und dem holographisch-optischen Element 6 und eine Folie zwischen dem holographisch-optischen Element 6 und dem Display Panel 7 angeordnet ist. Bei den Folien 11, 12 kann es sich unabhängig voneinander um Diffusorfolien, Mikrolinsenfolien, Prismenfolien, Lentikularfolien oder Reflexionspolarisationsfolien handeln. Weiterhin unterscheidet sich der Lichtleiter 5 des ASD 81 von dem ASD 1 der Figur 1 dadurch, dass er in der Papierebene sowohl an der oberen Seite als auch an der unteren Seite mit einer refraktiven Oberflächenstruktur 10 versehen ist.

Der Einsatz der optischen Folien 11 und 12 sowie das Vorhandensein der refraktiven Oberflächen 10 führt zu einer Homogenisierung bzw. Verbesserung der Lichtausbeute.

Bei dem Design des ASD 1 sowie den davon abgeleiteten Designs ASD 31, 41, 51, 61,71 und 81 kann es von Vorteil sein, die dem Display Panel jeweils abgewandte Seite des Lichtleiters vorwiegend reflektiv zu gestalten, bzw. diese zu verspiegeln. Hierdurch kann eine höhere Helligkeit des Displays und eine homogenere Ausleuchtung realisiert werden.

### Bezugszeichenliste:

- (1, 11, 21, 31, 41, 51, 61, 71, 81): ASD
- (2): Beleuchtungseinheit
- (3): Lichtquelle
- (4): Lichtquelle
- (5, 45): Lichtleiter
- (6, 6a, 6b, 16, 36, 46, 56): holographisch-optisches Element
- (7): Display Panel
- (8): Steuereinheit
- (9): Elektrische Zuleitung
- (10): refraktive Oberfläche
- (11, 12): optische Folien

## Patentansprüche

1. Autostereoskopisches 3D Display (1) umfassend eine Beleuchtungseinheit (2) mit zwei Lichtquellen (3, 4), einen Lichtleiter (5), ein holographisch-optisches Element (6) als diffraktives, optisches Lichtlenkelement, ein transparentes Display Panel (7) und eine Steuereinheit (8), um die Lichtquellen (3, 4) alternierend jeweils mit einem rechten und einem linken, auf dem Display Panel (7) dargestellten, parallaktischen Bild zu synchronisieren, wobei die Lichtquellen (3, 4) ausgerichtet sind, um Licht jeweils aus unterschiedlichen Richtungen in den Lichtleiter (5) einzustrahlen und das holographisch-optische Element (6) und das Display Panel (7) derart angeordnet sind, dass vom Lichtleiter abgegebenes Licht, abhängig von seiner Vorzugrichtung, vom holographisch-optischen Element (6) in zwei verschiedene Richtungen gebeugt und durch das Display Panel (7) gelenkt wird.

2. Autostereoskopisches 3D Display (1) nach Anspruch 1, **dadurch gekennzeichnet, dass** wenigstens eine Oberfläche des Lichtleiters (5) eine refraktive Oberfläche (10) aufweist.

3. Autostereoskopisches 3D Display (1) nach Anspruch 2, **dadurch gekennzeichnet, dass** die refraktive Oberfläche (10) lineare translationsinvariante Prismenstrukturen, mehrdimensionale pyramidenartige Prismenstrukturen, lineare translationsinvariante Linsenstrukturen basierend auf Ellipsoiden, Polynomen, Kreiskegelabschnitten, Hyperbeln oder Kombinationen dieser Grundkörper, mehrdimensionale halbkugelartige Linsenstrukturen basierend auf Ellipsoiden, Polynomen, Kreiskegelabschnitten, Hyperbeln oder Kombinationen oder Kombinationen dieser Grundkörper, nichtperiodische streuende Oberflächenstruktur, entweder flächig aufgebracht oder bereichsweise in Kombination mit nichtstreuenden Strukturen aufweist.

4. Autostereoskopisches 3D Display (1) nach einem der Ansprüche 1 bis 3, **dadurch gekennzeichnet, dass** es zusätzlich wenigstens ein optische Folie (11, 12) aufweist.

5. Autostereoskopisches 3D Display (1) nach Anspruch 4, **dadurch gekennzeichnet, dass** die optische Folie (11, 12) eine Diffusorfolie, Mikrolinsenfolie, Prismenfolie, Lentikularfolie oder eine Reflexionspolarisationsfolie ist.

6. Autostereoskopisches 3D Display (1) nach einem der Ansprüche 1 bis 5, **dadurch gekennzeichnet, dass** das holographisch-optische Element (6) ein Volumenhologramm ist.

7. Autostereoskopisches 3D Display (1) nach einem der Ansprüche 1 bis 6, **dadurch gekennzeichnet, dass** das holographisch-optische Element (6) so ausgebildet ist, dass es eine kollimierende oder divergierende Winkelverteilung erzeugt.

8. Autostereoskopisches 3D Display (1) nach einem der Ansprüche 1 bis 7, **dadurch gekennzeichnet, dass** das holographisch-optische Element (6) ein transmissives und / oder reflektives Hologramm und/oder ein transmissives und / oder reflektives Edge-lit Hologramm ist.

9. Autostereoskopisches 3D Display (1) nach einem der Ansprüche 1 bis 8, **dadurch gekennzeichnet, dass** das holographisch-optische Element (6) aus mehreren miteinander angrenzend verbundenen Einzelhologrammen aufgebaut ist.

10. Autostereoskopisches 3D Display (1) nach Anspruch 1 bis 9, **dadurch gekennzeichnet, dass** das holographisch-optische Element (6) bzw. die miteinander verbundenen Einzelhologramme aus Volumenhologrammen bestehen die bevorzugt durch Multiplexing und ganz besonders bevorzugt durch Winkelmultiplexing und / oder Wellenlängenmultiplexing erhältlich sind.

11. Autostereoskopisches 3D Display (1) nach einem der Ansprüche 1 bis 9, **dadurch gekennzeichnet, dass** der Lichtleiter (5) ein Quader ist.

12. Autostereoskopisches 3D Display (1) nach einem der Ansprüche 1 bis 10, **dadurch gekennzeichnet, dass** die Lichtquellen (3, 4) Gasentladungslampen, bevorzugt kalte Gasentladungslampen, lichtemittierende Dioden, bevorzugt rote, grüne, blaue, gelbe und / oder weiße lichtemittierende Dioden und / oder Laserdioden sind.

13. Autostereoskopisches 3D Display (1) nach einem der Ansprüche 10 oder 11, **dadurch gekennzeichnet, dass** die Lichtquellen (3, 4) an zwei gegenüberliegenden Seitenflächen des Quaders angeordnet sind.

14. Autostereoskopisches 3D Display (1) nach einem der Ansprüche 10 bis 12, **dadurch gekennzeichnet, dass** das holographisch-optische Element (6), der Lichtleiter (5) und das Display Panel (7) in einer der folgenden Reihenfolgen angeordnet sind: holographisch-optisches Element (6), Lichtleiter (5) und Display Panel (7) oder Lichtleiter (5), holographisch-optisches Element (6), Display Panel (7).

15. Autostereoskopisches 3D Display (1) nach Anspruch 13, **dadurch gekennzeichnet, dass** das holographisch-optische Element (6), der Lichtleiter (5) und das Display (7) flächig miteinander verbunden sind.
